# EUROPEAN PATENT APPLICATION

(11) **EP 1 737 093 A2**
(43) Date of publication of application: **27.12.2006**
(21) Application number: 06380148.4
(22) Date of filing: 31.05.2006
(51) Int. Cl.: H02G 3/00

(54) **Electrical mechanism adapter to a raceway moulding and the like**

(30) Priority: 22.06.2005 ES 200501412 U
(71) Applicant: Unex Aparellaje Electrico S.L., 08903 L'Hospitalet de Llobregat (Barcelona) (ES)
(72) Inventor: Salcedo Suñol, Eloi, 08620 Saint Vinceç Dels Horts Barcelona (ES)
(74) Representative: Curell Aguilà, Marcelino

(57) **Abstract**

Electrical mechanism adapter to a raceway moulding, of the type which attaches in a section of the raceway moulding where the cover section thereof has been removed, and which includes a quadrangular support base (2), a cover housing (3) and an detachable lid (4). Quadrangular support base (2) has an extension (7) from which two flat toggled arms (8) extend intended to clamp the base section of the raceway moulding. Detachable lid (4) has first retention means (23, 23A) with respect to flat toggled arms (8) and second retention means (27) with respect to longitudinal grooves in the base section of the raceway moulding. Cover housing (3) is provided with a visor (19) which is applied to detachable lid (4) imprisoning it.

## Description

### Field of the invention

This invention relates to an electrical mechanism adapter to a raceway moulding and the like, in particular a raceway moulding of the type consisting of the association of a base section and a cover section that can connect to one another, in a dismountable way, by fitting the two edges of said cover section into respective grooves in said base section. The type of adapter referenced in the invention is connected to the raceway moulding in a stretch where the cover section has been removed, and it has a quadrangular support base intended to house the electrical mechanisms, a cover housing and an detachable lid intended to replace the removed stretch of the cover section.

The raceway moulding is understood to be a raceway of the type for electrical cables, of a small size, made by extruding a synthetic thermoplastic material and constituted by joining a base section and a cover section as described above. This does not exclude the fact that the object of the invention may also be applicable to other types of raceways, baseboards, etc., providing that they have the described configuration.

### Prior art

Positioning an electrical mechanism, such as for example a switch, a breaker, a plug base, etc., alongside a raceway moulding through which there run electrical cables that are to be connected to said electrical mechanism, introduces the problem of making the outlet for the electrical cables, so that they can be inserted into said electrical mechanism, without losing the protection providing by the raceway moulding and without exposing them to the environmental and circumstantial aggressions to which they are exposed when left free outside.

In order to overcome this drawback and to do away with the fortuitous means used to protect the cables emerging from the raceway moulding, owing to the lack of means expressly intended for this purpose, various solutions have been proposed based on opening a side window in the base section of the raceway moulding, such as in the case of Spanish Utility Model ES-200202769 in the name of the applicant.

Spanish Utility Model ES-200200013, also in the name of the applicant, relates to an adapter of the type indicated at the beginning in which it is proposed to do away with a part of the cover section, suitably sized for the outlet of the cables required in each case and to cover it with an detachable lid which, as well as providing protection for the electrical cables, provides an aesthetic finish in line with the electrical mechanism housing.

Although the mentioned solutions are useful in most cases, providing not only an acceptable degree of security for the electrical cables against possible aggressions and accidents, but also a very reasonable aesthetic aspect, they are complicated devices to implement and their application is limited, because a device is required for each raceway moulding model. On the other hand, they suffer from the drawback that when two electrical mechanism adapters have to be installed together, there is always a portion of the base section that remains uncovered, because the detachable lids do not cover the space between the adapters, and fortuitous solutions have to be sought, such as, for example, placing a very narrow piece of the raceway moulding cover section between them both.

### Summary of the invention

The invention intends solving the problem of obtaining an electrical mechanism adapter which can be applied to any model in the raceway moulding range and which does not cause any problems when juxtaposing two or more adapters.

This aim is achieved by means of an adapter of the type indicated at the beginning, characterised in that:
- the quadrangular support base has, on the side thereof facing the raceway moulding, an extension from which two flat, toggled arms project that extend parallel to one another in a cantilever arrangement to clamp the base section of the raceway moulding at the front and the top;
- the detachable lid includes first retention means cooperating with corresponding means arranged on said flat, toggled arms, and second retention means cooperating with the longitudinal grooves in the base section of the raceway moulding; and
- the cover housing has a visor applied over the detachable lid, imprisoning it.

The thus configured adapter overcomes the problem raised: the detachable lid can be designed so that it is adaptable to any of the models in the raceway moulding range, the quadrangular support base can be applied to any raceway moulding height, thanks to the flat, toggled arms that clamp the raceway moulding base section irrespective of the height thereof, and two or more adapters can be juxtaposed without any insulation problems regarding the raceway moulding or any other problems concerning the juxtaposing of the adapters. The first retention means of the lid part ensure a retention force on a parallel plane to the seating plane of the quadrangular support base, while the second retention means provide a retention force perpendicular to said seating plane, while the visor provided in the housing prevents the lid piece from tilting and working loose.

Preferably, the first retention means of the detachable lid include a longitudinal rib arranged on the inner face of said detachable lid, the corresponding means, with which said first retention means cooperate, consisting of grooves arranged on the flat, toggled arms and into which said longitudinal rib fits. In an advantageous solution, in which the detachable lid can be adapted to different raceway moulding heights, the inner face of the detachable lid is also provided with at least a supplementary longitudinal rib, which is equal and parallel to the longitudinal rib, and one or more weakening lines extending along the longitudinal ribs.

Advantageously, the detachable lid is in the shape of a covering which at the longitudinal ends thereof extends in respective orthogonal support walls and includes a lower longitudinal wall extending in the perpendicular direction between said support walls closing the detachable lid on one side, with the height of said lower longitudinal wall being higher than that of said support walls.

Preferably, the second retention means of the detachable lid include projections arranged on the inner face of the lower longitudinal wall of the detachable lid, said projections being suitable for fixing into the longitudinal grooves in the raceway moulding base section.

Optionally, the adapter according to the invention includes an endstop for closing the side of a raceway moulding when the adapter is installed at the end of said raceway moulding. This endstop has first attachment means cooperating with corresponding means arranged in the quadrangular support base, and second attachment means cooperating with corresponding means arranged in said detachable lid.

Preferably, the first attachment means of the endstop include an upper transversal projection defined along the upper edge of the endstop and the corresponding means arranged on the quadrangular support base consist of grooved columns arranged on the outside of the flat, toggled arms emerging from the extension, said grooved columns having a groove in which said upper transversal projection fits slidably.

Preferably, the second attachment means of the endstop include a lower transverse projection defined along the lower edge of the endstop and the corresponding means arranged on the detachable lid consist of transversal grooves on the inner face of the lower longitudinal wall of the detachable lid, said lower transversal projection fitting slidably into the transversal grooves. In an advantageous solution, said transversal grooves and said lower transversal projection have a complementary acute angle section.

Preferably, the quadrangular support base includes a cross member extending between the flat, toggled arms and two flaps that can be removed by breakage, which are coplanar to one another and to said cross member, and which project from the flat toggled arms. Advantageously, said flaps are joined together by a breaking point, are joined to the cross member by respective breaking points, and are joined to the flat toggled arms by respective weakening lines.
Advantageously, the quadrangular support base has small wedges, which project from the extension in the quadrangular support base and are coplanar to the seating plane defined by the seating plate, said wedges being intended as a seat for the raceway moulding base section.

Preferably, the cover housing snap attaches to the quadrangular support base by means of lugs arranged on the seating plate of said quadrangular support base.

In an advantageous embodiment, on the inner face of the lower longitudinal wall of the detachable lid, the edges of the side ends of said lower longitudinal wall have bevelled undercuts.

Preferably, the length of the detachable lid is equal to the width of said cover housing, whereby the side of the adapter is securely closed.

In an advantageous solution, the quadrangular support base has, projecting sideways from said flat toggled arms, two positioning hooks having at the end thereof a mutually complementary shape, and which allow a suitable relative position between two quadrangular support bases when two juxtaposed adapters are installed in the same raceway.

### Brief description of the drawings

Other advantages and characteristics of the invention will be appreciated from the following description in which, in a non-limiting manner, some preferable embodiments of the invention are described, with reference to the accompanying drawings showing :
Figure 1, an exploded perspective view of the various elements making up an electrical mechanism adapter according to the invention: a quadrangular support base, a cover housing, an detachable lid and an endstop. The detachable lid and the endstop have been duplicated so as to show both faces thereof.
Figures 2, 3 and 4, respectively, front, lower and sectioned side view along line IV-IV of Figure 2, of the quadrangular base support shown in Figure 1.
Figure 5, a front view of the quadrangular base support in Figures 1 through 4, installed in a middle point of a raceway moulding, without including the cover housing or the detachable lid.
Figure 6, a similar view to Figure 5, showing one case in which the quadrangular support base is installed at the end of a raceway moulding, in this case a wider raceway moulding than that shown in Figure 5.
Figure 7, a partial front view of the ensemble in Figure 5, including the cover housing and the detachable lid, shown partially in section.
Figure 8, a rear view of the ensemble in Figure 7.
Figure 9, a sectioned view along ling IX-IX in Figure 8.
Figure 10, a front view of the ensemble in Figure 6, with the cover housing and the detachable lid added and shown partially in section.
Figure 11, a rear view of the ensemble in Figure 10, with details of the attachment of the endstop to the quadrangular support base and to the detachable lid.
Figure 12, a sectioned view along line XII-XII in Figure 11.
Figure 13, a front view of an example wherein two adapters according to the invention have been arranged, assembled in a juxtaposed manner in an intermediate point in a raceway moulding, without including the cover housings or the detachable lids.
Figure 14, a front view, on a less enlarged scale, of the arrangement in Figure 13, in which the cover housings and the detachable lids have been installed.

### Detailed description of some embodiments of the invention

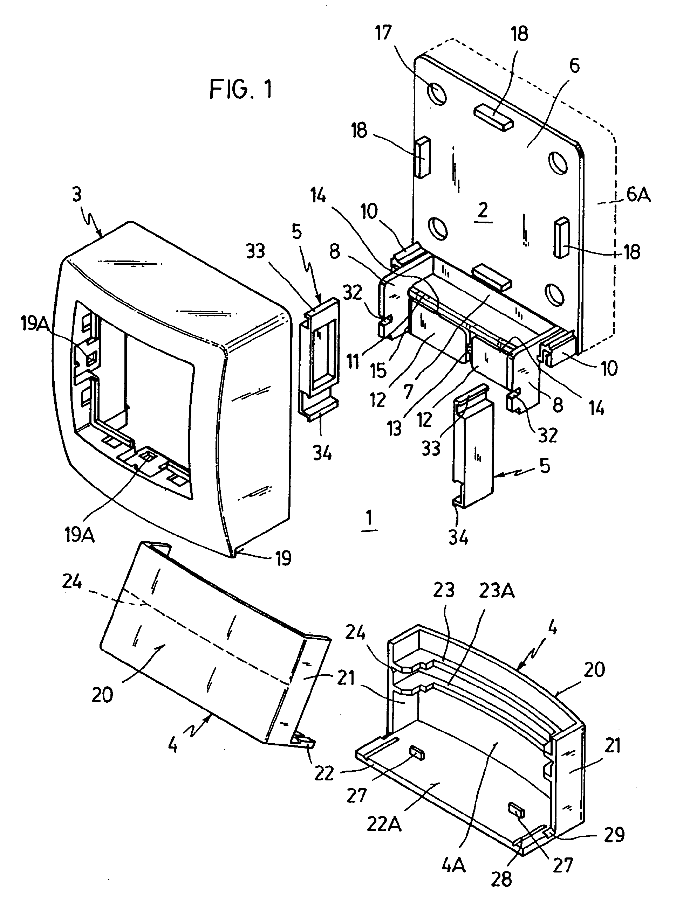

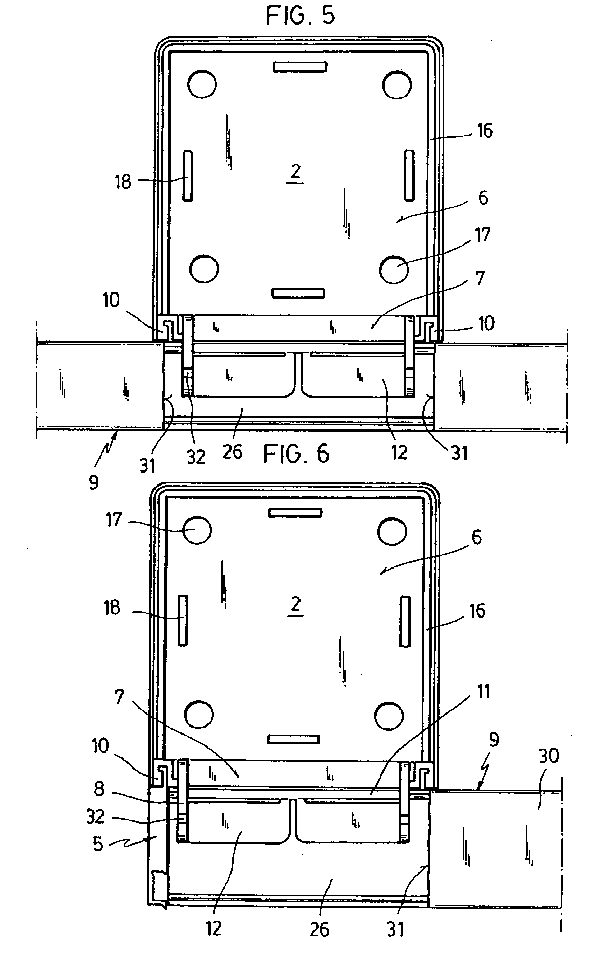

Figure 1 shows an electrical mechanism adapter 1 according to the invention, including a quadrangular support base 2, a cover housing 3, an detachable lid 4 and, optionally, an endstop 5 intended to close the side of a raceway moulding 9 when adapter 1 is arranged at the end of said side (as shown in Figures 6, 10, 11 and 12).

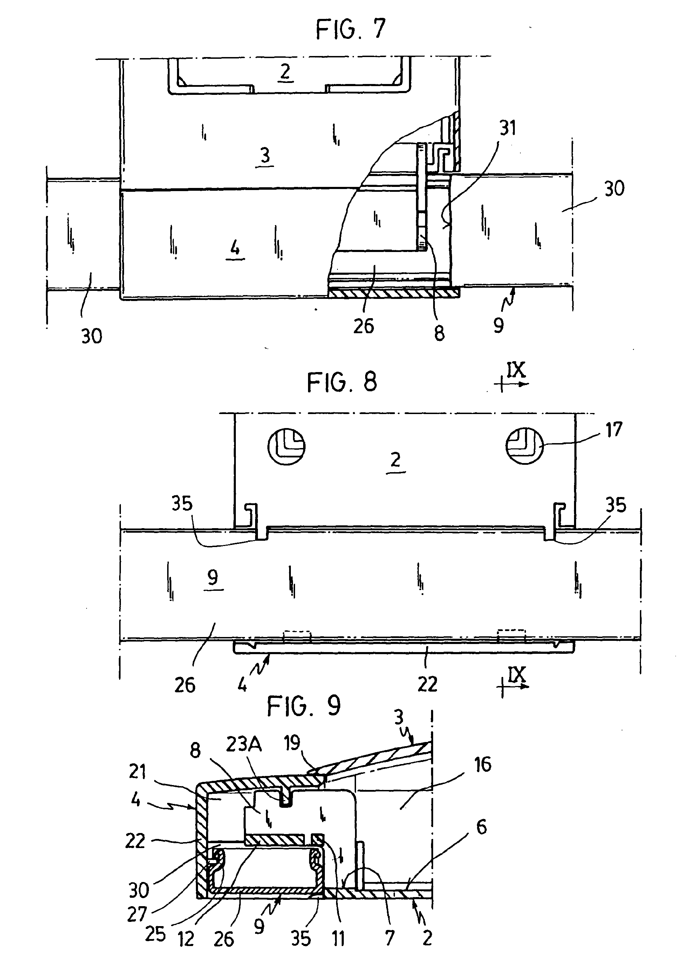

Raceway moulding 9 in which electrical mechanism adapter 1 is arranged, shown in Figures 5 through 14, is made up of the association of a base section 26 and a cover section 30 that can be attached together, in a dismountable way, by fitting the two edges of said cover section 30 into respective longitudinal grooves 25 on said base section 26. In order to attach electrical mechanism adapter 1 to raceway moulding 9, cover section 30 is cut to remove a stretch thereof the length of which coincides with the lower side of quadrangular support base 2. Figures 5, 6, 7 and 13 show the cut 31 made in cover section 30 to position electrical mechanism adapter 1.

Both adapter 1 and raceway moulding 9 are made from synthetic plastics.

Quadrangular support base 2, which in this particular embodiment is square, is made up essentially of the following:
- A seating plate 6 that can adopt different thicknesses (as indicated by reference 6A in Figure 1), only by modifying a simple part of the mould;
- an extension 7 in the seating plane defined by said seating plate 6;
- two flat, toggled arms 8 extending parallel to one another and in a cantilever arrangement from said extension 7 and which are intended to clamp base section 26 of a raceway moulding 9 or another channelled electrical cable housing;
- two grooved columns 10 intended for the attachment of endstop 5, said grooved columns 10 being arranged on the outside of said flat, toggled arms 8 and also projecting from said extension 7;
- a cross member 11 extending between said flat arms 8; and
- two flaps 12 projecting from said flat arms 8 and which are coplanar to one another and to said cross member 11.

Advantageously, flaps 12 are joined together by a breakage point 13, to said cross member 11 by respective breakage points 14, and to flat, toggled arms 8 by respective weakening lines 15, so that said flaps 12 can be removed individually, by being broken, to pass the electrical cables from raceway 9 to the electrical mechanism installed in adapter 1.

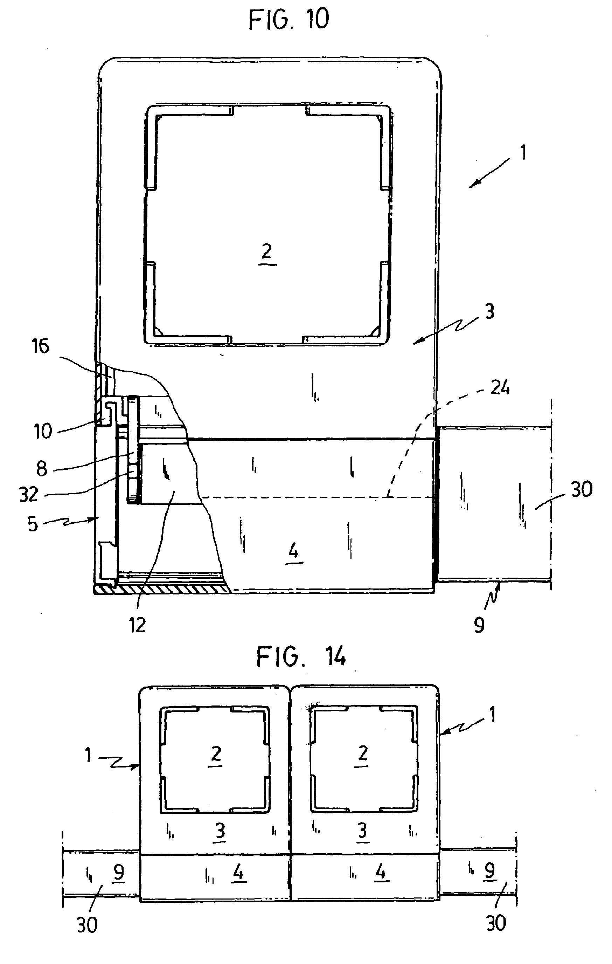

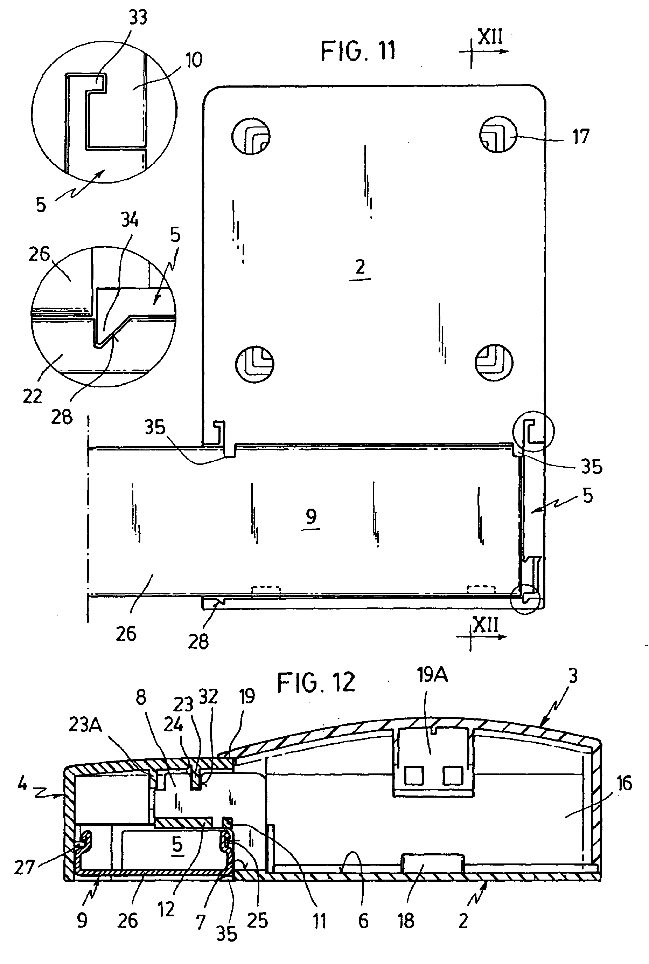

In quadrangular support base 2, small wedges 35 are also envisaged, which project from extension 7, and are coplanar to the seating plane defined by seating plate 6. Said wedges 35 are intended as a seat for base section 26 of raceway moulding 9. When electrical mechanism adapter 1 is installed in raceway moulding 9, base section 26 fits between flat, toggled arms 8 and wedges 35, as can be seen in Figures 9 and 12.

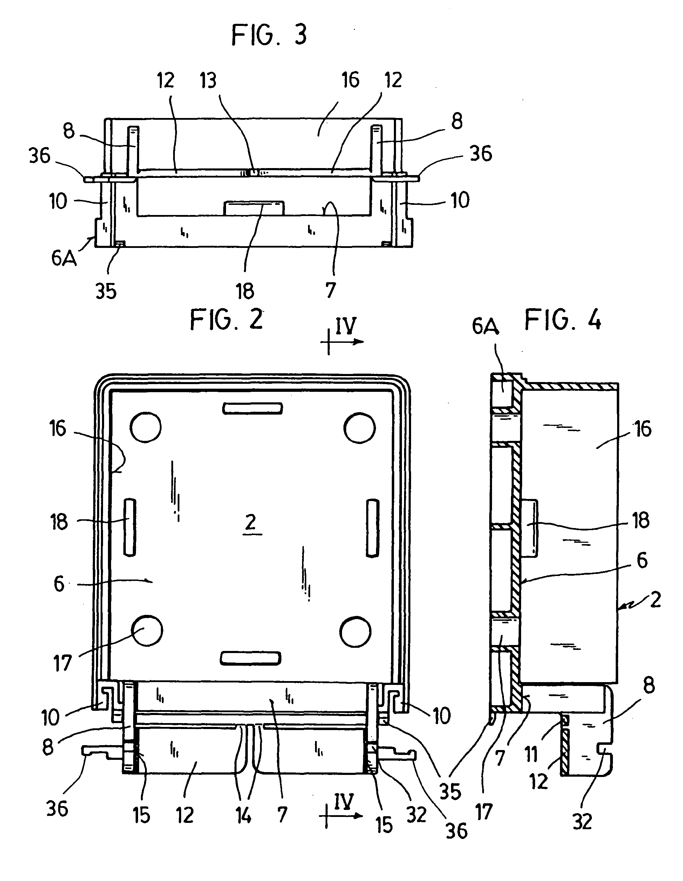

Seating plate 6, which can be flat as shown in Figure 1 or have a wall 16 as can be seen in Figures 2, 3 and 4, has through holes 17 for attaching with screws support base 2, and it also has lugs 18 for the snap attachment of cover housing 3 to support base 2.

Cover housing 3, in the front part thereof which coincides with raceway moulding 9, has a visor 19 intended to be applied to detachable lid 4, imprisoning it to stop it from tilting. Also, cover housing 3 has conventional fitting means 19A for the electrical mechanism and other means not shown for the snap attachment using lugs 18 of seating plate 6.

Detachable lid 4, the length of which is equal to the width of cover housing 3, forms a covering 20, which can be flat or curved and which at the longitudinal ends thereof extends in respective orthogonal support walls 21. A lower longitudinal wall 22 extends in the perpendicular direction between said support walls 21 closing detachable lid 4 on one side. Said lower longitudinal wall 22 is higher than support walls 21, so that in the installed position of adapter 1 in raceway moulding 9, support walls 21 rest on raceway moulding 9, while lower longitudinal wall 22 extends fitting close to said raceway moulding 9, underneath it, and reaches the seating plane of adapter 1 defined by plate 6, as can be seen in Figure 9.

Detachable lid 4 is provided, on the inner face 4A of covering 20, with a longitudinal rib 23 forming first retention means of said detachable lid 4 by fitting into grooves 32 arranged on flat, toggled arms 8 of support base 2. Also, one or more supplementary longitudinal ribs 23A are provided, the same as and parallel to rib 23, and one or more weakening lines 24 extending along said longitudinal ribs. Said weakening lines 24 mean detachable lid 4 can be fractioned, maintaining at least one of longitudinal ribs 23A, in order to adapt it to different raceway moulding widths 9. Figure 9 shows detachable lid 4 of Figure 1 after it has been fractioned by weakening line 24 to apply it to a smaller width raceway moulding 9. In Figure 12, on the other hand, the whole detachable lid 4 can be seen, applied to a raceway moulding 9 of corresponding width.

In addition, detachable lid 4 is provided, also on inner face 22A of lower longitudinal wall 22, with projections 27 forming second retention means of said detachable lid 4, by attaching to longitudinal grooves 25 arranged in base section 26 of raceway moulding 9.

Endstop 5 includes, as means for attaching to quadrangular support base 2 and to detachable lid 4, respectively, an upper transversal projection 33 defined along the upper edge of said endstop 5, and a lower transversal projection 34 defined along the lower edge. Upper transversal projection 33 fits slidably into a complementary shaped groove arranged on each grooved column 10. Lower transversal projection 34 fits slidably into complementary shaped transversal grooves 28 arranged on inner face 22A of lower longitudinal wall 22 of detachable lid 4, next to side ends of said lower longitudinal wall 22. Advantageously, transversal grooves 28, as well as complementary shaped lower transversal projection 34, have an acute angle section.

Additionally, also on inner face 22A of lower longitudinal wall 22 of detachable lid 4, the edges of the side ends of said lower longitudinal wall 22 have bevelled undercuts 29 which enable a flat pointed tool to be inserted, such as for example, a screwdriver, to easily dismantle detachable lid 4 and access the electrical cables when necessary.

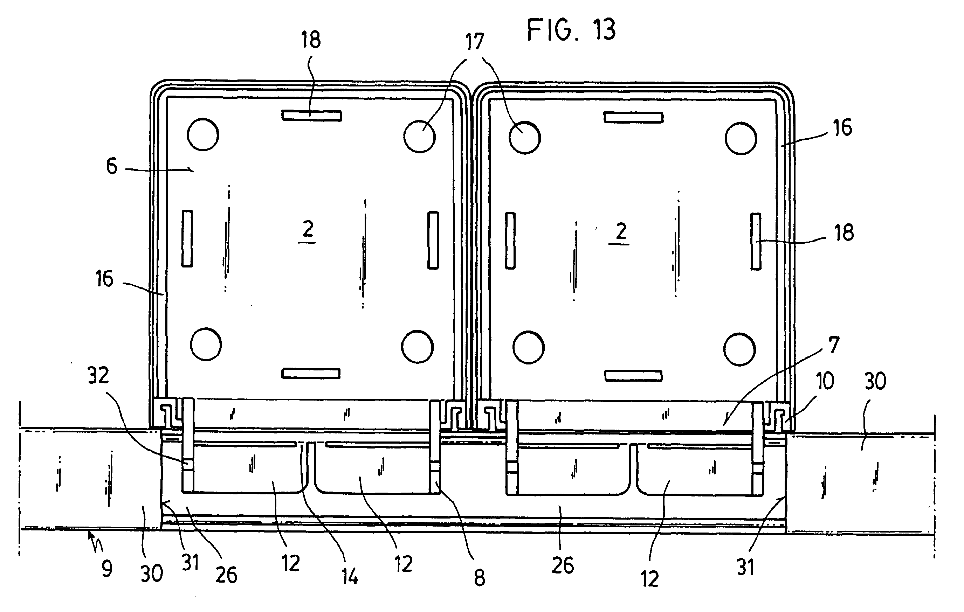

Figures 13 and 14 show the installation of two electrical mechanism adapters 1 according to the invention, juxtaposed in one and the same raceway moulding 9. Adapters 1 according to the invention arranged as such fulfil the technical electrical cable insulation requirements, while also providing an agreeable aesthetical appearance.

Figures 2 and 3 show positioning hooks 36 that project respectively from each flat, toggled arm 8. Said positioning hooks 36 have a mutually complementary shape at the ends thereof, so that when two quadrangular support bases 2 are placed against one another, to install two juxtaposed adapters in one and the same raceway, hooks 36 are related to one another, whereby the relative position of said quadrangular support bases 2 is fixed.

Moreover, support bases 2, as well as cover housings 3 and detachable lids 4, can each be designed to install two or more electrical mechanisms in one and the same unit, without thereby departing from the frame of this invention.

## Claims

1. Electrical mechanism adapter (1) to a raceway moulding (9) and the like, said raceway moulding (9) being of the type made up of the association of a base section (26) and a cover section (30) that can be connected together, in a dismountable way, by fitting the two edges of said cover section (30) into respective longitudinal grooves (25) of said base section (26), said electrical mechanism adapter (1) being suitable for attaching to said raceway moulding (9) in a section where said cover section (30) has been removed, and said electrical mechanism adapter (1) comprising a quadrangular support base (2) intended to house the electrical mechanisms, a cover housing (3) and an detachable lid (4) intended to replace the removed section of cover section (30), **characterised in that**:
- said quadrangular support base (2) has, on the side thereof facing said raceway moulding (9), and extension (7) from which two flat, toggled arms (8) project which extend parallel to one another and in a cantilever arrangement to clamp the base section (26) of the raceway moulding (9) at the front and the top;
- said detachable lid (4) has first retention means (23, 23A) which cooperate with corresponding means (32) arranged on said flat, toggled arms (8), and second retention means (27) which cooperate with said longitudinal grooves (25) of base section (26) of raceway moulding (9); and
- said cover housing (3) is provided with a visor (19) that is applied on said detachable lid (4) imprisoning it.

2. Adapter according to claim 1, **characterised in that** said first retention means of detachable lid (4) include a longitudinal rib (23) arranged on the inner face (4A) of said detachable lid (4), said corresponding means (32), with which said first retention means (23) cooperate, being made up of grooves (32) arranged on said flat, toggled arms (8) and in which said longitudinal rib (23) fits.

3. Adapter according to claim 2, **characterised in that** inner face (4A) of said detachable lid (4) is also provided with at least one supplementary longitudinal rib (23A), equal and parallel to said longitudinal rib (23), and one or more weakening lines 24 extending along said longitudinal ribs.

4. Adapter according to any of the claims 1 through 3, **characterised in that** said detachable lid (4) is in the shape of a covering (20) which at the longitudinal ends thereof extends in respective orthogonal support walls (21), and has a lower, longitudinal wall (22) which extends in the perpendicular direction between said support walls (21) closing said detachable lid (4) on one side, with the height of said lower longitudinal wall (22) being higher than that of said support walls (21).

5. Adapter according to claim 4, **characterised in that** said second retention means of detachable lid (4) include projections (27) arranged on inner face (22A) of said lower longitudinal wall (22) of detachable lid (4), said projections (27) being suitable for fitting into the longitudinal grooves (25) of base section (26) of raceway moulding (9).

6. Adapter according to any of the claims 1 through 5, **characterised in that** it includes an endstop (5) suitable for closing the side of a raceway moulding (9) when adapter (1) is installed at the end of said raceway moulding (9), said endstop part (5) having first attachment means (33) which co-operate with corresponding means (10) arranged on said quadrangular support base (2), and second attachment means (34) that co-operate with corresponding means (28) arranged on said detachable lid (4).

7. Adapter according to claim 6, **characterised in that** said first attachment means of endstop part (5) include an upper transversal projection (33), defined along the upper edge of said endstop part (5), and said corresponding means arranged on quadrangular support base (2) consist of grooved columns (10) arranged on the outside of said flat, toggled arms (8) and emerging from said extension (7) of quadrangular support base (2), said grooved columns (10) having a groove in which said upper transversal projection (33) fits slidably.

8. Adapter according to claims 4 and 6, **characterised in that** said second attachment means of endstop part (5) include a lower transversal projection (34) defined along the lower edge of said endstop part (5) and said corresponding means arranged on detachable lid (4) consist of transversal grooves (28) on inner face 22A of lower longitudinal wall 22 of detachable lid 4, said lower transversal projection (34) fitting slidably into said transversal grooves (28).

9. Adapter according to claim 8, **characterised in that** said transversal grooves (28) and said lower transversal projection (34) have a complementary, acute angle section.

10. Adapter according to any of the claims 1 through 9, **characterised in that** said quadrangular support base (2) includes a cross member (11) which extends between said flat, toggled arms (8) and two flaps (12) removable through breakage, coplanar to one another and to said cross member (11), which project from said flat, toggled arms (8).

11. Adapter according to claim 10, **characterised in that** said flaps (12) are joined together by a breakage point (13), said flaps (12) are joined to said cross member (11) by respective breakage points (14), and said flaps (12) are joined to said flat toggled arms (8) by respective weakening lines (15).

12. Adapter according to claims 1 through 11, **characterised in that** said quadrangular support base (2) is provided with small wedges (35) that project from said extension (7) arranged on quadrangular support base (2), coplanar to the seating plane defined by said seating plate (6), said wedges (35) being intended as a seat for base section (26) of raceway moulding (9).

13. Adapter according to any of the claims 1 through 12, **characterised in that** said cover housing (3) snap attaches to said quadrangular support base (2) by means of lugs (18) arranged on seating plate (6) of said quadrangular support base (2).

14. Adapter according to any of claims 1 through 13, **characterised in that** on inner face (22A) of lower, longitudinal wall (22) of detachable lid (4), the edges of the side ends of said lower longitudinal wall (22) have bevelled undercuts (29).

15. Adapter according to any of claims 1 through 14, **characterised in that** the length of said detachable lid (4) is equal to the width of said cover housing (3).

16. Adapter according to any of the claims 1 through 15, **characterised in that** said quadrangular support base (2) is provided, projecting sideways from said flat toggled arms (8), with two positioning hooks (36), which have at the end thereof a mutually complementary shape.
